# EUROPEAN PATENT SPECIFICATION

(11) **EP 3 290 495 B1**
(45) Date of publication and mention of the grant of the patent: **24.08.2022**
(21) Application number: 16786200.2
(22) Date of filing: 04.03.2016
(51) Int. Cl.: C10M 103/06, C09D 5/02, C09D 5/03, C09D 201/00, C09D 7/40, C10M 125/30, C10M 173/02, C10N 20/00, C10N 20/06, C10N 30/06, C10N 30/12, C10N 40/24, C10N 50/02, C10N 50/08

(54) **SOLID LUBRICANT, LUBRICATING COATING AGENT FOR METAL MATERIAL, SURFACE-TREATED METAL MATERIAL, AND METHOD FOR FORMING LUBRICATING COATING FOR METAL MATERIAL**
FESTES SCHMIERMITTEL, SCHMIERBESCHICHTUNGSMITTEL FÜR METALLMATERIAL, OBERFLÄCHENBEHANDELTES METALLMATERIAL UND VERFAHREN ZUR HERSTELLUNG EINES SCHMIERBESCHICHTUNGSMITTELS FÜR METALLMATERIAL
LUBRIFIANT SOLIDE, AGENT DE REVÊTEMENT LUBRIFIANT POUR MATÉRIAU MÉTALLIQUE, MATÉRIAU MÉTALLIQUE TRAITÉ EN SURFACE, ET PROCÉDÉ DE FORMATION DE REVÊTEMENT LUBRIFIANT POUR MATÉRIAU MÉTALLIQUE

(30) Priority: 27.04.2015 JP 2015090838
(43) Date of publication of application: 07.03.2018
(73) Proprietor: Nihon Parkerizing Co., Ltd., Tokyo 103-0027 (JP)
(72) Inventor: OSHITA, Kenichiro, Tokyo 103-0027 (JP); KOMIYAMA, Shinobu, Tokyo 103-0027 (JP)
(74) Representative: Hoffmann Eitle
(86) International application number: PCT/JP2016/056763
(87) International publication number: WO 2016/174923

(56) References cited:
- WO-A1-03/080774
- WO-A1-2012/086564
- WO-A1-2012/133455
- JP-A- H05 156 277
- JP-A- S53 127 352
- JP-A- 2005 314 558
- JP-B1- S 311 023

## Description

### Technical Field

The present invention relates to a solid lubricant for imparting excellent lubricity to the surface of a metal material such as iron and steel, stainless steel, aluminum, and titanium, a lubricating coating agent including the solid lubricant, and a lubricating coating formed with the use thereof, as well as techniques related thereto. More particularly, the present invention is directed to a solid lubricant which can be used for plastic working such as forging, wire drawing, tube drawing, and heading of the metal material, for press molding of a plate material, and in sliding parts of various devices, and a lubricating coating agent including the solid lubricant, and further including no black-based lubricant such as molybdenum disulfide or graphite.

### Background Art

In general, in plastic working of metal materials such as iron and steel and stainless steels, for the purposes of preventing from seizure and galling caused by metal contact between materials to be worked and tools, and imparting corrosion resistance, coatings that have lubricity and corrosion resistance are provided on the metal material surfaces. Such coatings include two types: a reactive type of forming, on a metal material surface, a chemical conversion coating by chemical reaction, and then further forming a lubricant thereon; and a non-reactive type of physically forming a lubricant on a metal material surface.

Lubricating coatings that have a two-layer structure obtained by forming, on a metal material surface, a chemical conversion coating such as a phosphate coating or an oxalate coating that has a role as a carrier, and then further applying a lubricant such as a lime soap, a molybdenum disulfide, or an oil, and lubricating coatings that have a three-layer structure (chemical conversion coating/metal soap coating/unreacted soap coating) obtained by applying a chemical conversion coating, and then reactive coating with a reactive soap such a sodium stearate are widely used in the case of the former reactive type. In particular, the latter lubricating coatings that have the three-layer structure are known to be capable of producing stable and excellent lubricity even in heavy working regions.

However, the chemical conversion treatment with the chemical reaction and the reactive soap require solution management, temperature management for controlling the chemical reaction, removal and disposal of sludge as a reaction by-product, and disposal renewal due to solution deterioration. For the purpose of global environmental conservation in recent years, the reduction of industrial waste has become a great problem. To that end, lubricating coating agents and treatment methods which produce no waste have been desired.

As a lubricating coating agent for solving the problem mentioned previously, Patent Literature 1 discloses a water-based lubricant for cold plastic working of metal materials, which includes: (A) at least one water-soluble inorganic salt selected from sodium tetraborate, borax, potassium tetraborate, and sodium sulfate; (B) at least one solid lubricant selected from metal soaps composed of calcium stearate, barium stearate, and zinc stearate, mica, and PTFE; (C) at least one oil component selected from a mineral oil, animal and plant oils, and an ester oil; (D) a surfactant for homogeneously emulsifying the oil component in water and homogeneously dispersing the solid lubricant in water; and (E) water, where the weight ratio (B/A) of the solid lubricant to the water-soluble inorganic salt is 0.05/1 to 2/1, and the weight ratio (C/(A + B)) of the oil component to the total amount of the water-soluble inorganic salt and the solid lubricant is 0.05/1 to 1/1, and the solid lubricant and the oil component are homogeneously dispersed and emulsified respectively. This lubricating coating agent is a non-reactive coating-type lubricant without the generation of sludge unlike the chemical conversion treatment with the chemical reaction and the reactive soap, and without solution deterioration. However, the water-soluble inorganic salt which serves as a main constituent of a coating has the problem of possibly causing lubricity to be deteriorated through the moisture absorption from moisture vapor in the atmosphere, and there has been thus a need for re-drying before working or control for lowering humidity in the plant.

Moreover, the lubricant included in the lubricating coating insufficiently follows to area expansions of metal surfaces under severe conditions on the degree of working, and has problems such as lubricity decreased, thereby leading to galling.

In addition, in the fields of cold plastic working and sliding coatings, molybdenum disulfide has been used as a solid lubricant since a long time ago. This is due in large part to the low friction and favorable abrasion resistance of the lubricating coating containing molybdenum disulfide. However, the lubricating coating agent containing molybdenum disulfide is black, which problematically contaminates working environments. In addition, the expensiveness and poor economy of molybdenum disulfide are also reasons of demand for the development of non-black solid lubricants.

Patent Literature 2 describes metalworking oil composition comprising a base oil, a bentonite clay mineral treated with an organic substance, and an active sulfur compound. In the examples of Patent Literature 2, liquid oil compositions are described, which comprise 0.5 to 8 wt.-% bentonite.

Patent Literature 3 relates to a hot rolling lubricant for steels comprising a base oil, calcium carbonate and lipophilic clay. The example of Patent Literature 3 uses montmorillonite as lipophilic clay.

In Patent Literature 4, a lubricant for wire drawing is described, wherein the lubricant is obtained by mixing and melting a metal soap and a solid paraffin or an oil-and-fat-based wax, adding talc to the resulting mixture, and kneading the resulting mixture.

Patent Literature 5 relates to a solid lubricant containing a specific modified silicone compound as a component.

The lubricating coating agent for plastic working described in Patent Literature 6 contains a calcium sulfate hydrate deposited by reacting a sulfuric acid or a sulfate with a calcium compound in water. Crystals of the calcium sulfate hydrate have a scale-like shape and a thickness of 1.5 µm or less.

### Citation List

### Patent Literature

Patent Literature 1: JP 3517522 B2
Patent Literature 2: JP 2005 314588 A
Patent Literature 3: JP S53 127352 A
Patent Literature 4: JP S31 1023 B1
Patent Literature 5: JP H05 156277 A
Patent Literature 6: EP 2 692 838 A1

### Summary of Invention

### Technical Problem

To deal with the challenge and problem of the prior art mentioned previously, a main object of the present invention is to provide a solid lubricant that is non-black in color and capable of reducing industrial waste (environmental conservation), and further capable of achieving a balance among excellent lubricity, moisture absorption resistance, and corrosion resistance in a heavy working region, and a lubricating coating agent including the solid lubricant.

### Solution to Problem

The inventors have found, as a result of earnest studies for solving the problem mentioned previously, the problem can be solved by a solid lubricant characterized in that it includes carrier particles including therein a specific lipophilic lubricating component between particles of and/or between layers of a specific layered clay mineral, and a lubricating coating agent for a metal material, which uses the solid lubricant, thereby leading to the completion of the present invention.

More specifically, a solid lubricant according to the present invention is as defined in claim 1.

Furthermore, the aspect ratio in a cross section of the layered clay mineral is preferably 3 to 150, more preferably 5 to 100, and further preferably 5 to 30, wherein the aspect ratio is a proportion of the length of a planar part to a thickness of a particle of the layered clay mineral.

The lipophilic lubricating component preferably has a solubility parameter (SP value) of 10 or less, further preferably 9 or less.

Furthermore, the layered clay mineral is preferably 40° or more, and further preferably 60° or more in water contact angle.

Furthermore, the layered clay mineral is 30 µm or less, preferably 20 µm or less, and preferably 10 µm or less in average particle size.

The solid lubricant is characterized in that the inclusion amount of the lipophilic lubricating component between the particles and/or between the layers is preferably 5 mass% or more, and further preferably 8 mass% or more in mass ratio to the total mass of the carrier particles, wherein the inclusion amount of the lipophilic lubricating component is measured with the use of a total organic carbon meter equipped with a solid sample burning system.

The layered clay mineral preferably has Mohs hardness of 2 or less, and further preferably 1.

The solid lubricant can be used in a preferred manner in a lubricating coating agent for plastic working of metallic materials, in particular, a lubricating coating agent for cold plastic working. Accordingly, the present invention also relates to the use of the solid lubricant in a lubricating coating agent for plastic working of a metal material.

The problem mentioned previously can be also solved by a lubricating coating agent for a metal material, characterized in that the lubricating coating agent contains the solid lubricant mentioned previously.

The lubricating coating agent for a metal material according to the present invention is a water-based lubricating coating agent for a metal material, where a component including the solid lubricant is dispersed in water, and the lubricating coating agent is characterized in that the concentration of the solid lubricant is 5 mass% or more in mass ratio to the mass of the total solid content in the lubricating coating agent.

In addition, the problem mentioned previously can be also solved by an oil-based lubricating coating agent for a metal material, where a component including the solid lubricant is dispersed in an oil. In this case, the concentration of the solid lubricant is 5 mass% or more in mass ratio to the mass of the total solid content in the lubricating coating agent.

Furthermore, the problem mentioned previously can be also solved by a powder-based lubricating coating agent for a metal material, which contains a component including the solid lubricant according to the present invention. In this case, the concentration of the solid lubricant is 5 mass% or more in mass ratio to the mass of the total solid content in the lubricating coating agent.

The problem mentioned previously can be also solved by a surface-treated metal material characterized in that a coating obtained by using the previously mentioned lubricating coating agent for a metal material is formed on/over a metal material surface to be 0.5 g/m² or more as a dried coating amount.

A method for forming a lubricating coating and a method for manufacturing a surface-treated metal material have only to include a contact step of bringing a metal material into contact with the previously mentioned lubricating coating agent for a metal material. As a further preferred method, a method for forming a lubricating coating for a metal material and a method for manufacturing a surface-treated metal material can be applied, which are characterized in that the methods include, before the contact step mentioned previously, a cleanup step of cleaning up the surface of a metal material by at least one cleanup means from the group of shot blasting, sandblasting, alkaline degreasing, and acid cleaning.

In the previously mentioned method for forming a lubricating coating and method for manufacturing a surface-treated metal material, a chemical conversion treatment step of coating the surface of the metal material with a chemical conversion coating can be also further applied before the contact step.

### Effects of Invention

According to the present invention, the solid lubricant characterized in that it includes the carrier particles including the lipophilic lubricating component trapped between the particles of and/or the layers of the layered clay mineral, the lubricating coating agent for a metal material, the surface-treated metal material, and the method for forming a lubricating coating for a metal material are applied, thereby achieving a non-black color and great environmental conservation, producing excellent lubricity in a stable manner even in a heavy working region, and thus making it possible to prevent seizure and galling, and further achieving excellent operability such as the moisture absorption resistance of the lubricating coating, and further, excellent corrosion resistance.

### Description of Embodiments

The present invention will be described in more detail. First, the definition of a solid lubricant will be described. According to Solid Lubrication Handbook (Japanese Society of Tribologists: Yokendo Co., Ltd. (2009) 53), the solid lubricant refers to a matter interposed between two objects for purposes such as friction reduction, seisure prevention, and improved mold life when the objects cause relative movement. In general, the solid lubricant is used as one component of a lubricating coating for plastic working, sliding members, press molding, and the like, and specifically, layered clay minerals, inorganic salts, polymer materials, soft metals, and the like are applied as the solid lubricant.

In these solid lubricants, the layered clay minerals and the inorganic salts preferably themselves have cleavage. Molybdenum disulfide and graphite are typical examples thereof. The cleavage refers to the property of splitting and fracturing at a crystal face with the weakest atomic bonding force when a load is applied to a solid lubricant. This property causes, in plastic working, the solid lubricant to follow effective to an area expansion of the worked surface during the working, thereby imparting slidability, and at the same time, preventing galling.

A first feature of the present invention is that a cleavage layered clay mineral includes a lipophilic lubricating component between particles and/or between layers corresponding to cleavage faces, thereby in addition to the action of the layered clay mineral, further causing a solid lubricant to take a role as carrier particles for causing the lipophilic lubricating component to follow to an area expansion of the worked surface during working. To explain in more detail, the layered clay mineral refers to particles of two-dimensional layered crystals stacked parallel and bonded. According to the present invention, the spaces between surfaces of the layered crystals are defined as interlayer spaces. Furthermore, when the previously mentioned layered crystals stacked parallel and bonded are regarded as primary particles, multiple primary particles may further aggregate (agglomerate) into larger secondary particles (the layered clay mineral that forms the secondary particles is referred to as an "aggregated layered clay mineral"), and in this case, the spaces between the particles are defined as inter-particle spaces. Both the interlayer spaces and the inter-particle spaces are loosely bonded in a layered form, which serve as cleavage faces that are capable of including a lipophilic lubricating component according to the present invention. The inclusion of the lipophilic lubricating component between the particles of and/or between the layers of the cleavage layered clay mineral allows the layered clay mineral and the lipophilic lubricating component to follow at the same time, that is, to take a role as carrier particles, even in working which is high in working load and high in the area expansion factor of the worked surface, such as cold plastic working, thereby imparting slidability at the same time as the prevention of galling, and thus allowing for improved lubricity. The previous techniques have never achieved such a role taken as carrier particles. It is to be noted that the "inclusion" herein means conditions that the lipophilic lubricating component is trapped between the particles of and/or between the layers of the layered clay mineral. More specifically, in the carrier particles according to the present invention, when the layered clay mineral is not cleaved, the lipophilic lubricating component is held between the particles of and/or between the layers of the layered clay mineral, and this condition is referred to as an "inclusion" condition according to the present invention. On the other hand, when the layered clay mineral is cleaved during working, the lipophilic lubricating component included between the particles of and/or between the layers of the layered clay mineral exudes to the worked surface, and the exudation of the lipophilic lubricating component follows along with the layered clay mineral so as to wet the worked surface.

On the other hand, lubricating coating agents that use a layered clay mineral including no lipophilic lubricating component between particles and/or between the layers may cause coatings to follow poorly to area expansions during working, due to the shortage of slidability, thereby decreasing the lubricity, and thus causing galling. Moreover, due to the high forming load, problems may arise such as a short mold life.

According to the present invention, layered clay minerals that are capable of including the lipophilic lubricating component can include a smectite group of natural products and synthetic products, a vermiculite group of natural products and synthetic products, a mica group of natural products and synthetic products, a brittle mica group of natural products and synthetic products, a pyrophyllite group of natural products and synthetic products, and a kaolinite group of natural products and synthetic products. These layered clay minerals may be each used alone, or more than one thereof may be used in combination.

In addition, a layered clay mineral with an organic substance supported between layers of the layered clay mineral by the method described in the International Publication WO 2012/086564 A may be used as the layered clay mineral mentioned previously. Examples of the organic substance can include at least one cationic organic compound (organic group + cationic group) selected from organic ammonium compounds, organic phosphonium compounds, and organic sulfonium compounds. In this regard, the organic group of the organic compound is not particularly limited, but preferred are straight-chain, branched-chain, and cyclic (having a cyclic group) saturated hydrocarbon or unsaturated hydrocarbon groups having 1 to 30 carbon atoms. In addition, the hydrogen atoms bonded to the carbon atoms constituting the carbon chains or the carbon rings may be substituted with other substituent groups, some of the carbon atoms constituting the carbon chains or the carbon rings may be substituted with other atoms (such as O and S, for example), and furthermore, other linkages (for example, ester linkages, ether linkages) may be included between C-C chains. Preferred is an organic ammonium compound composed of: an aliphatic hydrocarbon group (preferably having 1 to 30 carbon atoms) which is advantageous for friction reducing ability; and an ammonium group which is advantageous for interlayer fixing ability. In this regard, chlorides, bromides, iodides, nitrates, fluorides, hydroxides, and the like are preferred as organic salts for use in the interlayer introduction of the organic compound. Particularly preferred organic salts are quaternary ammonium chlorides from which by-product salts are easily removed by water rinsing (such as (capryl trimethyl ammonium chlorides, lauryl trimethyl ammonium chlorides, stearyl trimethyl ammonium chlorides, dicapryl dimethyl ammonium chlorides, dilauryl dimethyl ammonium chlorides, and distearyl dimethyl ammonium chlorides). Supporting the foregoing organic substances between the layers of the layered clay mineral increases the interlayer distance, and further hydrophobizes between layers of and the surface of the layered clay mineral, thus advantageously allowing the lipophilic lubricating component to be included more.

Furthermore, the layered clay mineral will be described in more detail. Clay minerals are main-constituent minerals constituting clay, layered silicate minerals (phyllosilicate minerals), calcite, dolomite, feldspars, quartz, boiling stones (zeolite), and others, minerals that have chain-like structures (such as attapulgite, sepiolite), minerals that have no clearly crystal structure (allophane), and the like are referred to as clay minerals, and in general, layered silicate minerals among the clay minerals are referred to as layered clay minerals.

The layered clay mineral forms a crystal structure that has two-dimensional layers of positive and negative ions stacked parallel and bonded, and this layered structure has therein two structural units: one unit of a tetrahedral layer composed of Si⁴⁺ and O²⁻ surrounding the Si⁴⁺; the other of an octahedral layer composed of Al³⁺ (or Mg²⁺, Fe²⁺, or the like) and (OH)⁻ surrounding the Al³⁺.

In the tetrahedral layer, O located at four vertexes of the tetrahedron and Si located in the center form tetrahedrons of Si-O, which are linked to each other at the three vertexes to spread two-dimensionally, thereby forming a layer lattice that has a composition of Si₄O₁₀. The Si⁴⁺ is often substituted with Al³⁺.

In the octahedral layer, octahedrons formed by (OH) or O located at six vertexes of the octahedron and Al, Mg, Fe, or the like located in the center are linked at each vertex to spread two-dimensionally, thereby forming a layer lattice that has a composition of Al₂(OH)₆, Mg₃(OH)₆, or the like.

The octahedral layers include: a 3-octahedral type that has lattice points all occupied with a divalent cation (such as Mg²⁺) at the lattice point of cation surrounded by six anions; and a 2-octahedral type that has 2/3 lattice points occupied with a trivalent cation (such as Al³⁺) at the lattice point of cation, and 1/3 lattice points remaining vacant.

There are two types of combinations of tetrahedral layers and octahedral layers: one of the combinations is a 2 : 1 type structure that has, as a unit, a linkage of two tetrahedral layers and one octahedral layer sandwiched therebetween; and the other is a 1 : 1 type structure that has, as a unit, a linkage of one tetrahedral layer and one octahedral layer. The smectite group, vermiculite group, mica group, and pyrophyllite group mentioned previously refer to layered clay minerals that have the 2 : 1 type structure, whereas the kaolinite group refers to layered clay minerals that have the 1 : 1 type structure.

With regard to the relationship between the hydrophilicity of the layered clay mineral and the crystal structure, for example, as for kaolin, the layered clay mineral has the 1 : 1 crystal structure, which is believed to exhibit hydrophilicity due to the orientation of octahedrons with hydrophilic groups (such as OH) at the surface. On the other hand, in the case of the 2 : 1 crystal structure, there is believed to be a strong tendency to be lower in hydrophilicity than the 1 : 1 structure, because of the orientation of tetrahedrons having hydrophobic groups (SiO) at the surface.

To explain layered clay minerals that belong to the respective groups in more detail, the smectite group includes montmorillonite, beidellite, nontronite, saponite, iron saponite, hectorite, sauconite, and stevensite, the vermiculite group includes di.vermiculite and tri.vermiculite, the mica group includes muscovite, palagonite, illite, phlogopite, biotite, lepidolite, and lepidolite, the brittle mica group includes margarite and clintonite, the pyrophyllite group includes pyrophyllite and talc, and the kaolinite group includes kaolinite, dickite, nacrite, halloysite, chrysotile, lizardite, and antigorite. These layered clay minerals can be all used for a lubricating coating agent for metal materials according to the present invention, but among these minerals, particularly preferred is at least one selected from the two layered clay minerals that belong to the pyrophyllite group mentioned above. The reason is because the layered clay minerals that belong to the pyrophyllite group are low in Mohs hardness and excellent in lipophilicity.

Next, in the solid lubricant according to the present invention, the lipophilic lubricating component included between the particles of and/or between the layers of the layered clay mineral mentioned previously is at least one selected from an oil, an extreme-pressure agent, a soap, and a wax.

At least one selected from the group consisting of mineral oils, animal and plant oils, and synthetic oils can be used as the oil. More specifically, for example, naphthenic mineral oil or paraffinic mineral oil-based machine oils, turbine oils, spindle oils, and the like can be used as the mineral oils. For example, palm oils, rapeseed oils, coconut oils, castor oils, beef tallow, pork oils, whale oils, fish oils, or these components with ethylene oxide added thereto (for example, polyoxyethylene castor oils (ethylene oxide adducts)) can be used as the animal and plant oils. Ester oils (for example, esters of polyhydric alcohols such as ethylene glycol and trimethylolpropane and fatty acids such as stearic acid, oleic acid, and linoleic acid (e.g., trimethylolpropane trioleate)), silicone oils (for example, polydimethylsiloxane and polydiphenylsiloxane), and the like can be used as the synthetic oils. Hydrophobic organic compounds (for example, organic ammonium compounds, organic phosphonium compounds, organic sulfonium compounds, organic amine compounds) can be also used as synthetic oils for the lipophilic lubricating component according to the present invention. The naphthenic mineral oils are preferred as the mineral oils; the palm oils and the castor oils of the plant oils, and the oils with ethylene oxide added thereto (polyoxyethylene plant oils (ethylene oxide adducts)) are preferred as the animal and plant oils; and the ester oils (trimethylolpropane trioleate) are preferred as the synthetic oils.

An agent that effectively develops an extreme-pressure effect at the friction surface between a metal material and a tool during working is preferred as the extreme-pressure agent. Examples of such an extreme-pressure agent can include sulphurized olefins, sulfurized esters, sulphites, thiocarbides, phosphate esters, phosphite esters, molybdenum dithiocarbamate (MoDTC), molybdenum dithiophosphate (MoDTP), zinc dithiophosphate (ZnDTP), and tricresyl phosphate, and the phosphates (tricresyl phosphate) are preferred. According to the present invention, while it is also possible for the oil and the extreme-pressure agent to be each included alone in the layered clay mineral, it is preferable to use the oil and the extreme-pressure agent in combination in order to achieve higher lubricity. In this case, the ratio between the oil and the extreme-pressure agent preferably falls within the range of 1 : 0.03 to 1 : 1 in mass ratio. When the ratio between the oil and the extreme-pressure agent is 1 : 0.03 to 1 : 1 in mass ratio, the lubricity is further improved with an extreme-pressure action imparted. When the ratio between the oil and the extreme-pressure agent exceeds 1 : 1, the extreme-pressure action is nearly saturated.

It is preferable to use, as the soap, an alkali metal salt of a fatty acid (such as stearic acid, myristic acid, palmitic acid) having 12 to 26 carbon atoms, or a metal soap obtained by reacting a fatty acid (such as stearic acid, myristic acid, palmitic acid) having 12 to 26 carbon atoms and at least one metal selected from zinc, calcium, barium, aluminum, and magnesium. In addition, the soap preferably has a melting point of 100 to 250°C. An alkali metal salt of a stearic acid and a metal soap (zinc stearate) obtained by reacting a fatty acid having 12 to 26 carbon atoms and zinc are more preferred as the soap.

The wax is not to be considered particularly specified in terms of structure and type, but preferably has a melting point of 70 to 150°C, because the wax is melted by heat generated during working, thereby developing lubricity. Waxes that have a melting point in this range include, for example, microcrystalline waxes, polyethylene waxes, polypropylene waxes, and carnauba waxes, and polyethylene waxes are preferred.

Next, in order to achieve excellent lubricity, it is important for the lipophilic lubricating component to be included between particles of and/or between layers of the layered clay mineral in a more efficient manner. Parameters regarding the efficiency of the inclusion will be described. First, the parameters of the lipophilic lubricating component include a solubility parameter (SP value, unit (cal/cm³)^{1/2}). The solubility parameter refers to a parameter for solubility or compatibility in a two-component system. The solubility or compatibility is supposed to be better as the solubility parameters of the components are closer in value to each other. Various methods are disclosed for the measurement method. For example, methods such as a method of evaluation from solubility in a solvent with a known SP value, a Fedors method based on theoretical calculation, and a turbidimetric titration method are typical measurement methods. The turbidimetric titration method devised by K. WSuh, et al. was applied to the method for measuring the SP value according to the present invention (J. Appl. Polym. Sci., 12, 2359 (1968)). In accordance with the turbidimetric titration method, the SP value of the lipophilic lubricating component can be evaluated by dissolving the lipophilic lubricating component in a good solvent with a known SP value, and carry out turbidimetric titration with a poor solvent that is higher in SP value than the good solvent and a poor solvent that is lower in SP value than the good solvent. The SP value of water is approximately 23, and as the SP value of a target component is lower than that of water, the lipophilicity is higher.

The lipophilic lubricating component for use in the present invention preferably has an SP value of 10 or less, and further preferably 9 or less. When the SP value of the lipophilic lubricating component exceeds 10, the amount of the lipophilic lubricating component included between the layers of the layered clay mineral may be decreased due to decreased lipophilicity, thereby decreasing the lubricity. In addition, due to the decreased hydrophobicity of the lubricating component, the barrier properties against corrosive factors such as water and chlorine may be decreased, thereby decreasing the corrosion resistance. The lower limit of the SP value of the lipophilic lubricating component is not to be considered particularly specified, but for example, 7 or more.

In the case of using two or more types in mixture in the lipophilic lubricating component (for example, the oil and the extreme-pressure agent), as long as the difference is 1.5 or less between the respective SP values, excellent compatibility can achieve higher lubricity.

Furthermore, the solid lubricant according to the present invention has preferably lipophilic properties between layers of and on the surface of the layered clay mineral. Parameters therefor include a water contact angle. The water contact angle at the surface of the layered clay mineral alone may be preferably 40° or more, further preferably 60° or more. The upper limit of the water contact angle at the layered clay mineral is not to be considered particularly specified, but for example, 150° or less. When the water contact angle at the surface of the layered clay mineral alone is 40° or more, the lubricity and the corrosion resistance are further improved. In addition, in the combination of the layered clay mineral alone and the lipophilic lubricating component, further preferably, the water contact angle at the layered clay mineral alone is 40° or more, and the previously mentioned lipophilic lubricating component has an SP value of 10 or less. As long as the water contact angle at the layered clay mineral alone is 40° or more, and as long as the previously mentioned lipophilic lubricating component has an SP value of 10 or less, the inclusion of the lipophilic lubricating component between the particles and/or between the layers can be achieved in a more efficient manner, because of high mutual lipophilicity and affinity.

The inclusion amount of the lipophilic lubricating component is preferably 5 mass% or more, and further preferably 8 mass% or more in mass ratio to the total mass of the carrier particles. When the inclusion amount falls below 5 mass%, the lubricity during working may be decreased, thereby causing galling. In addition, the corrosion resistance may be also decreased. The upper limit of the inclusion amount of the lipophilic lubricating component is not to be considered particularly limited, but for example, 50 mass% or lower.

The layered clay mineral for use in the solid lubricant according to the present invention preferably has Mohs hardness of 2 or less from the perspective of lubricity. Further preferred Mohs hardness is 1. The reason is because while the solid lubricant is broken to follow in the direction of area expansion at the surface worked in plastic working or press working, there is a tendency to achieve a lower friction coefficient and a better carrier property for the lipophilic lubricating component as the layered clay mineral is lower in Mohs hardness, and as a result, better lubricity is achieved. The "carrier property" herein means that as a result of decreasing the friction coefficient of the layered clay mineral, the layered clay mineral is made more likely to follow in the direction of area expansion, and the lipophilic lubricating component is thus made likely to follow, along with the layered clay mineral, in the direction of area expansion at the worked surface. It is to be noted that the Mohs hardness can be measured with a Mohs scale. More specifically, 10 types (10-level Mohs hardness from 1 to 10: 1 for the softest and 10 for the hardest) of minerals that differ in hardness are adopted as reference materials, thereby evaluating whether the surface of the target material is scratched by a reference material or not. When the surface is not scratched, the reference material with higher hardness is used and evaluated until being scratched. When the surface is scratched, it is confirmed that the surface of the reference material is reversely scratched by the target material, thereby determining the Mohs hardness of the substance. This is because the materials can scratch each other as long as the materials have the same hardness.

The solid lubricant including the lipophilic lubricating component according to the present invention can be used as a solid lubricant for any lubricating coating agent of: water-based lubricating coating agent; oil-based lubricating coating agent; powder-based lubricating coating agent.

In the case of use as a solid lubricant for water-based lubricating coating agents, the solid lubricant according to the present invention may be dispersed in water with a surfactant or the like. The concentration of the solid lubricant is adjusted to be 5 mass% or more, more preferably 20 mass% or more in mass ratio to the mass of the total solid content (coating component) in the lubricating coating agent. The solid lubricant concentration of 5 mass% or more can enhance the lubricity dramatically, and the concentration of 20 mass% or more can further enhance the lubricity. On the other hand, the upper limit of the concentration of the solid lubricant is not to be considered particularly limited, but for example, 95 mass% or lower, preferably 80 mass% or lower.

In addition, the basic idea about the concentration of the total solid content (coating component) including the solid lubricant is that the concentration is adjusted appropriately such that the dried coating amount is 0.5 g/m² or more. However, the appropriate total solid content concentration in the lubricating coating agent may possibly vary depending on the condition (such as roughness) of the metal surface and the required degree of working, but typically, the concentration of the total solid content (coating component) including the solid lubricant in the lubricating coating agent is preferably 3 mass% or more when the total mass (also including water) of the lubricating coating agent is regarded as 100 mass%. The concentration lower than the foregoing concentration reduces the dried coating amount, thereby leading to failure to achieve expected lubricity in some cases. On the other hand, the upper limit of the concentration of the total solid content is not to be considered particularly limited, but for example, 70 mass% or lower, more preferably 50 mass% or lower.

Further, the concentration of the total solid content (coating component) with respect to the total mass (also including water) of the lubricating coating agent can be measured by the following method. More specifically, the lubricating coating agent is collected in a defined amount into a container made of Teflon (registered trademark), and the collection amount is weighed accurately. Thereafter, volatile components such as water are evaporated in an oven at 110°C for 2 hours, and the amount of residue (non-volatile component) is weighed accurately. The total solid content concentration is calculated from the following formula with the respective weighing values. It is to be noted that the weighing value after drying in the following formula corresponds to "the mass of the total solid content (coating component)" in calculating the concentration of the solid lubricant in the water-based lubricating coating agent. $total solid content concentration \left(mass%\right) = \left[\left(weighing value after drying\right)/\left(weighing value before drying\right)\right] \times 100$

The components of the previously mentioned water-based lubricating coating agent other than the solid lubricant include a base component for a lubricating coating and/or a binder component. Specifically, at least one selected from a water-soluble inorganic salt, a water-soluble organic salt, a water-based resin, an oil-based resin, an oil, an extreme-pressure agent, a soap, and a wax can be applied. The combination of the solid lubricant according to the present invention with the foregoing components can form the solid lubricant more strongly to metal material surfaces, thereby making it possible to produce lubricity even in severer worked regions. It is to be noted that the water-soluble inorganic salt and the water-soluble organic salt, as well as the water-based resin have moisture absorption properties, and have the property of being likely to decrease the lubricity. However, in the lubricating coating agent according to the present invention, the solid lubricant composed of the carrier particles including the lipophilic lubricating component between the layers of and/or between the particles of the layered clay mineral makes a large contribution on lubricity, and the moisture absorption of the component added as a base component for a lubricating coating and/or a binder component, such as the water-soluble inorganic salt, the water-soluble organic salt, and the water-based resin has substantially no problem.

Specifically, the water-soluble inorganic salt has at least one selected from the group consisting of sulfates, silicates, borates, molybdates, vanadates, tungstates, phosphates, and condensed phosphates. The water-soluble organic salt has at least one selected from the group consisting of malates, succinates, citrates, and tartrates. The cations of these salts have at least one selected from the group consisting of a sodium ion, a potassium ion, a lithium ion, an ammonium ion, amines (such as ethylamine), and alkanolamines (such as monoethanolamine and diethanolamine). Among these salts, the tungstates, the borates, and the condensed phosphates are particularly superior as a base component for a lubricating coating and a binder, thereby making it possible to achieve high lubricity.

As the water-based resin, that is, water-soluble or water-dispersible polymer resin, at least one can be selected from polymer resins of 1,000 to 1,000,000 in weight average molecular weight. In addition, the water-dispersible polymer resin is preferably 0.5 to 50 µm in average particle size (volumetric basis). The type of the polymer resin is not particularly limited as long as the polymer resin has coating formability, and stable solubility or dispersibility, but for example, polymer resins can be used, such as acrylic resins, urethane resins, epoxy resins, phenolic resins, hydroxyethyl cellulose, carboxymethyl cellulose, and polyvinyl alcohol. It is to be noted that the weight average molecular weight of the polymer resin can be measured by a gel permeation chromatography method (GPC method).

In addition, the oil, the extreme-pressure agent, the soap, and the wax are also intended to serve as lipophilic lubricating components, and according to the present invention, serves as components to be included between the particles of and/or between the layers of the layered clay mineral, but can be also used as a base component for a coating. The same as those included between the particles of and/or between the layers of the layered clay mineral may be used for the oil, the extreme-pressure agent, the soap, and the wax that can be used as a base component for a lubricating coating or a binder.

In the case of using the oil and the extreme-pressure agent as a base component of the water-based lubricating coating agent according to the present invention, the lubricity is enhanced more when the oil is used in combination with the extreme-pressure agent. The ratio between the oil and the extreme-pressure agent preferably falls within the range of 1 : 0.03 to 1 : 1 in mass ratio.

In the lubricating coating agent, any of non-ionic surfactants, anionic surfactants, amphoteric surfactants, and cationic surfactants can be used as a surfactant that disperses, in water, the solid lubricant according to the present invention and the oil and the extreme-pressure agent as base components. The non-ionic surfactants include, but not particularly limited thereto, for example, polyoxyethylene alkyl esters obtained from polyoxyethylene alkyl ether, polyoxyalkylene (ethylene and/or propylene) alkyl phenyl ether, or polyethylene glycol (or ethylene oxide) and a higher fatty acid (for example, 12 to 18 carbon atoms); and polyoxyethylene sorbitan alkyl esters composed of obtained from sorbitan, polyethylene glycol, and a higher fatty acid (for example, 12 to 18 carbon atoms). The anionic surfactants include, but not particularly limited thereto, for example, fatty acid salts, sulfates, sulfonates, phosphates, and dithiophosphates. The amphoteric surfactants include, but not particularly limited thereto, for example, amino acid-type and betaine-type carboxylates, sulfates, sulfonates, and phosphates. The cationic surfactants include, but not particularly limited thereto, for example, aliphatic amine salts and quaternary ammonium salts. These surfactants can be each used alone, or two or more of the surfactants can be used in combination.

The concentration of the surfactant is preferably 0.5 to 20 mass% in mass ratio to the mass of the total solid content (coating component) in the lubricating coating agent. When the proportion of the surfactant exceeds 20 mass%, the dispersibility of the solid lubricant is improved, while the lubricating coating may become fragile, thereby decreasing the lubricity. On the other hand, when the proportion falls below 0.5 mass%, the dispersibility of the solid lubricant is worsened, thereby making it impossible to form any uniform lubricating coating.

Furthermore, the oil and the extreme-pressure agent included in the layered clay mineral, or the oil and the extreme-pressure agent as a base component for a lubricating coating may be blended with a viscosity index improver for the purpose of achieving higher lubricity. Specifically, at least one viscosity index improver selected from polymethacrylates, olefin copolymers, and polyisobutylenes can be used. The viscosity index (JIS K2283) is preferably 100 or more, and more preferably 200 or more.

The concentration of the viscosity index improver is 1 to 10 mass%, more preferably 1 to 5 mass% in mass ratio to the total amount of the oil and/or the extreme-pressure agent. The addition of the viscosity index improver can suppress the decrease in oil viscosity due to a temperature increase during working. Thus, the amounts of the oil and extreme-pressure agent that can follow along with the solid lubricant are increased, thereby making it possible to make a further improvement in lubricity.

Next, in the case of using the solid lubricant according to the present invention for an oil-based lubricating coating agent, the oil alone, the extreme-pressure agent alone, or the oil and the extreme-pressure agent combined at 1 : 0.03 to 1 : 1 in mass ratio may be used as a base oil. In this case, the concentration of the solid lubricant is 5 mass% or more, more preferably 20 mass% or more, and further preferably 30 mass% or more in mass ratio to the mass of the total solid content in the lubricating coating agent. The lubricity can be further enhanced as the concentration of the solid lubricant is increased to 5 mass% or more, 20 mass% or more, and 30 mass% or more. On the other hand, the upper limit of the concentration of the solid lubricant is not to be considered particularly limited, but for example, 95 mass% or lower, preferably 80 mass% or lower.

In this case, the same as those used for the water-based lubricating coating agent mentioned previously may be applied for the oil, the extreme-pressure agent, the soap, the wax, the oil-based resin, and the viscosity index improver as a base component.

Furthermore, an oil-based resin that is dissoluble or dispersible in an oil may be added as a binder. Specifically, at least one resin of 1,000 to 1,000,000 in weight average molecular weight selected from the group consisting of acrylic resins, urethane resins, epoxy resins, phenolic resins, and the like can be used as a binder. In addition, the additive concentration is not particularly limited, but preferably falls within the range of 3 to 50 mass% in mass ratio to the total solid content of the lubricating coating.

In the case of using the solid lubricant according to the present invention as a powder-based lubricating coating agent, the solid lubricant may be used in a way that the concentration of the solid lubricant is adjusted to 5 mass% or more, more preferably 30 mass% or more in mass ratio to the total solid content mass in the lubricating coating agent. The adjustment of the solid lubricant concentration to 5 mass% or more can enhance the lubricity dramatically, and the adjustment thereof to 30 mass% or more can further increase the lubricity. As the powder-based lubricating coating agent, the solid lubricant itself may be applied directly to a metal material by an electrostatic powder coating or the like, and used (in this case, the concentration of the solid lubricant is 100 mass%), and a polymer resin may be used as a binder for the solid lubricant. The type of such a polymer resin is not particularly limited, but a powder resin of 1,000 to 1,000,000 in weight average molecular weight and 0.5 to 30 µm in average particle size can be applied, such as an acrylic resin, a urethane resin, an epoxy resin, a phenolic resin, a hydroxyethyl cellulose, a carboxymethyl cellulose, and a polyvinyl alcohol.

A surface-treated metal material according to the present invention is characterized in that the above-described lubricating coating agent for metal materials according to the present invention is provided on/over a metal material surface to achieve a coating amount of 0.5 g/m² or more as a dry coating amount. The set coating amount may be determined appropriately depending on the working level required. However, when the coating amount falls below 0.5 g/m², the lubricating coating may fail to fully coat a metal material surface depending on the roughness of the surface, and attention is thus required in terms of lubricity and corrosion resistance. In addition, the upper limit of the coating amount is not particularly specified, but even when the coating is formed in excess of 40 g/m², lubricity improved enough to meet the formation can be no longer expected, which is not economical, and problems may be even caused, such as defectively even application, defective adhesion, and the production of indentation by the remaining coating.

A method for forming a lubricating coating for a metal material according to the present invention and a method for manufacturing a surface-treated metal material according to the present invention are characterized by including a contact step of bringing a metal material into contact with the lubricating coating agent for metal materials according to the present invention. Specifically, an immersion method, a flow coating method, a spray method, brush coating, a liquid electrostatic coating method, and the like can be applied in the case of the water-based lubricating coating agent and the oil-based lubricating coating agent. For the application, the surface has only to be covered sufficiently with the lubricating coating agent according to the present invention, and there is no particular limit on the application time. There is a need to dry the water-based lubricating coating agent after applying the agent. For the drying, the agent may be left at room temperature, but preferably at 60 to 150°C for 1 to 30 minutes.

In the case of the water-based lubricating coating agent, in order to enhance drying characteristics, it is preferable to warm the metal material to 60 to 100°C, and bring the warmed metal material into contact with the water-based lubricating coating agent. It is to be noted that the metal material may be brought into contact with the water-based lubricating coating agent warmed to 50°C to 90°C. Thus, the drying characteristics are improved significantly, thereby making drying possible at room temperature in some cases, and thus making it possible to reduce the thermal energy loss.

The method for applying the powder-based lubricating coating agent is not particularly limited, but it is preferable to apply an electrostatic powder coating method from the perspective of ease of controlling the even application and coating thickness.

Furthermore, in order to improve the adhesion of the lubricating coating, it is preferable to clean up the metal material by at least one approach selected from the group consisting of shot blasting, sandblasting, alkaline degreasing, and acid cleaning (cleanup step) before the lubricating coating treatment (contact step). In this regard, the cleanup is intended to remove oxide scale grown by annealing or the like, and various types of contamination (e.g., oil). In particular, in recent years, reduced wastewater treatment burdens have been desired due to environmental concerns. In this case, the absence of wastewater can be achieved just by cleaning up the metal material surface by shot blasting, and then carrying out the contact step with the use of the lubricating coating agent according to the present invention.

The lubricating coating agent for metal materials according to the present invention is a non-reactive lubricating coating agent that involves no chemical conversion reaction, but after forming a chemical conversion coating in advance on the metal material surface (chemical conversion treatment step), the lubricating coating according to the present invention can be formed thereon, and used. Components for such a chemical conversion coating include: a phosphate of at least one selected from Zn, Fe, Mn, Ni, Co, Ca, Mg, and Al (metal material: iron and steel, aluminum, magnesium, and the like); an iron oxalate (metal material: stainless steel); an aluminum fluoride (metal material: aluminum); and a zirconium oxide (metal material: iron and steel, aluminum, magnesium, and the like). The application of the chemical conversion treatment further improves the lubricity, thereby making it possible to maintain excellent lubricity, for example, even in poor environments such as high-humidity environments.

In the method for manufacturing the solid lubricant according to the present invention, parameters for efficiently including the lipophilic lubricating component between particles of and/or between layers of the layered clay mineral include three of: (1) the lipophilicity of the layered clay mineral and the SP value of the lipophilic lubricating component; (2) inclusion method; and (3) the average particle size and aspect ratio of the layered clay mineral. The lipophilicity (water contact angle) of the layered clay mineral and the SP value of the lipophilic lubricating component are adapted as mentioned previously.

Examples of the inclusion method include, as an example, in the case of an oil and an extreme-pressure agent that are liquid at room temperature, an method of adding the oil and the extreme-pressure agent in predetermined amounts to a powder of the layered clay mineral, and causing the mineral to include therein the oil and the agent while stirring. In addition, in the case of desiring the inclusion achieved in a short period of time and desiring the increased inclusion amount, it is preferable to apply a so-called reduced-pressure impregnation method of, not simply the addition/stirring, but mixing the layered clay mineral, the oil, and the extreme-pressure agent in a decompression tank, and then returning the pressure to the atmospheric pressure, a method of inclusion with the oil warmed and thus reduced in viscosity, or the like. On the other hand, methods for the inclusion of a soap or a wax that is solid at room temperature include a method of turning the soap or the wax into a liquid at a temperature equal to or higher than the melting point thereof, and then mixing the liquid with the layered clay mineral, thereby causing the layers to include the liquid therebetween, and a method of applying the lubricant to a metal material surface, and then putting the material in an oven kept at a temperature equal to or higher than the melting point, thereby causing the layers to include the soap or the wax therebetween during the drying. In each case, mixing with the lipophilic lubricating component in an amount equal to or larger than the amount includable between the layers can interpose the lipophilic lubricating component not only between the layers, but also between the particles.

The layered clay mineral is 0.5 to 30 µm, preferably 1 to 20 µm, and preferably 1 to 10 µm in average particle size. The average particle size of 30 µm or less makes the lipophilic lubricating component likely to be included between the layers, thus improving the lubricity and the corrosion resistance. In addition, as the average particle size is reduced to 30 µm or less, 20 µm or less, and 10 µm or less, the lubricity is further improved. Even when the average particle size is less than 0.5 µm, the lubricity and the corrosion resistance are favorable, and the average particle size is selected from the perspective of cost (manufacturing cost) - effectiveness (lubricity and corrosion resistance).

Furthermore, the aspect ratio in a cross section of the layered clay mineral preferably falls within the range of 3 to 150, more preferably 5 to 100, further preferably 5 to 30. The aspect ratio in excess of 150 reduces the inclusion amount of the lipophilic lubricating amount, thereby possibly decreasing the lubricity and the corrosion resistance in some cases. In addition, the lubricity is further improved as the aspect ratio is reduced to 150 or less, 100 or less, and 30 or less. In contrast, when the aspect ratio falls below 3, the inclusion amount of the lipophilic lubricating component has no problem, but due to the layered clay mineral particles increased in thickness, the following performance of the lubricating coating may be decreased, thereby deteriorating the lubricity.

The average particle sizes of the water-dispersible polymer resin and layered clay mineral are measured by a laser diffraction method (volumetric basis). The average particle size of the layered clay mineral according to the present invention is intended for primary particles, and in order to keep as much as possible from being affected by secondary particles as aggregates of the primary particles, particle sizes are measured after enhancing redispersion (breaking secondary particles of the primary particles aggregated, thereby separating the secondary particles again into primary particles) with ultrasonic for approximately 3 to 5 minutes in advance. Thus, the average particle size for substantially primary particles can be measured by eliminating as much as possible the influence of secondary particles of the primary particles aggregated. Therefore, the average particle size of the layered clay mineral according to the present invention refers to an average value on a volumetric basis for the particle sizes of the primary particles of the layered clay mineral.

In addition, the aspect ratio according to the present invention is supposed to be defined as an aspect ratio in a cross section of the layered clay mineral, and obtained from the following formula. More specifically, the layered clay mineral for use in the present invention have plate-like or scale-like particles of two-dimensionally layered crystals stacked parallel and bonded as mentioned previously, and the proportion of the length of a planar part (that is, a crystal face parallel to a cleavage face) to the thickness of the particle (the length in a direction perpendicular to the cleavage face) corresponds to the aspect ratio in a cross section of the layered clay mineral. The thickness of the layered clay mineral particle and the length of the planar part can be measured at a magnification on the order of 3000 times with a scanning electron microscope (SEM). It is to be noted that the thickness of the layered clay mineral particle refers to a thickness that can be observed in the case of observation at approximately 3000-fold magnification with a SEM, but is not necessarily considered to mean the thickness of a unit lattice. $aspect ratio = length of planar part of particle / thickness of particle$

As just described, the lipophilicity of the layered clay mineral and the SP value of the lipophilic lubricating component as well as the average particle size and aspect ratio of the layered clay mineral are adapted to fall within the specific ranges, thereby making it possible to ensure, in a more reliable manner, that the inclusion amount of the lipophilic lubricating component into the layered clay mineral is 5 mass% or more. Furthermore, the reduced-pressure impregnation method, the method of mixing, with the layered clay mineral, a soap or a wax turned into a liquid at a temperature equal to or higher than the melting point thereof, thereby causing the particles and the layers to include the soap or the wax therebetween, or a method of applying the lubricant to a metal material surface, and then putting the material in an oven kept at a temperature equal to or higher than the melting point, thereby causing the particles and layers to include the soap or the wax therebetween during the drying is used, thereby making it possible to further increase the inclusion amount of the lipophilic lubricating component.

### Examples

Effects of the present invention will be verified with reference to examples and comparative examples. Here are details of the respective components for manufacturing lubricating coating agents for metal material for use in the examples and comparative examples.

### [description of raw material for use in manufacture of lubricating coating agent]

Here are details of layered clay minerals (before the inclusion of the lipophilic lubricating component) used for tests. The average particle size of the layered clay mineral was measured by a laser diffraction method on a volumetric basis under the following conditions after the redispersion of the layered clay mineral into primary particles with ultrasonic in water for 3 minutes in advance.
name of measurement machine: LA-920 from Horiba, Ltd.
data loading frequency: 10 times
calculation frequency: 30 times
ultrasound intensity: 7
ultrasound time: 3 minutes
dispersion medium circulation speed: 3

In addition, the aspect ratio was calculated from the thickness of the particle (the length in a direction perpendicular to a cleavage face) and the length of the planar part (that is, the crystal face parallel to the cleavage face) by observation of the layered clay mineral at a magnification of 3000 times with a scanning electron microscope. The layered clay mineral was subjected to an organic treatment in accordance with the method described in International Publication WO 2012/086564 A. The water contact angle was measured with a bed of layered clay mineral powder between two copper plates (50 × 50 mm), which was pressed at a tightening force of 100 kgf into the form of a coating. An automatic contact angle meter DM-501 from Kyowa Interface Science Co., Ltd. was used for the measurement.

### [layered clay mineral]

### <by water contact angle>

A-1 kaolinite: average particle size 3 µm, water contact angle 20°, Mohs hardness 2

### aspect ratio: 20

A-2 organic treated kaolinite: average particle size 3 µm, water contact angle 40°, Mohs hardness 2

### aspect ratio: 20

distearyl dimethyl ammonium chloride treated with an organic matter corresponding to 0.2 molar quantity with respect to the cation exchange capacity (CEC value)

A-3 organic treated kaolinite: average particle size 3 µm, water contact angle 60°, Mohs hardness 2

### aspect ratio: 20

distearyl dimethyl ammonium chloride treated with an organic matter corresponding to 0.4 molar quantity with respect to the cation exchange capacity (CEC value)

A-4 organic treated kaolinite: average particle size 3 µm, water contact angle 110°, Mohs hardness 2

### aspect ratio: 20

distearyl dimethyl ammonium chloride treated with an organic matter corresponding to 1.0 molar quantity with respect to the cation exchange capacity (CEC value)

### <by Mohs hardness>

A-5 talc: average particle size 3 µm, water contact angle 110°, Mohs hardness 1

### aspect ratio: 20

A-6 synthetic mica: average particle size 3 µm, water contact angle 110°, Mohs hardness 3

### aspect ratio: 20

### <by average particle size>

A-7 talc: average particle size 0.5 µm, water contact angle 110°, Mohs hardness 1

### aspect ratio: 20

A-8 talc: average particle size 10 µm, water contact angle 110°, Mohs hardness 1

### aspect ratio: 20

A-9 talc: average particle size 20 µm, water contact angle 110°, Mohs hardness 1

### aspect ratio: 20

A-10 talc: average particle size 30 µm, water contact angle 110°, Mohs hardness 1

### aspect ratio: 20

A-11 talc: average particle size 40 µm, water contact angle 110°, Mohs hardness 1

### aspect ratio: 20

### <by aspect ratio>

A-12 talc: average particle size 10 µm, water contact angle 110°, Mohs hardness 1

### aspect ratio: 2.5

A-13 talc: average particle size 10 µm, water contact angle 110°, Mohs hardness 1

### aspect ratio: 3

A-14 talc: average particle size 10 µm, water contact angle 110°, Mohs hardness 1

### aspect ratio: 5

A-15 talc: average particle size 10 µm, water contact angle 110°, Mohs hardness 1

### aspect ratio: 30

A-16 talc: average particle size 10 µm, water contact angle 110°, Mohs hardness 1

### aspect ratio: 100

A-17 talc: average particle size 10 µm, water contact angle 110°, Mohs hardness 1

### aspect ratio: 150

A-18 talc: average particle size 10 µm, water contact angle 110°, Mohs hardness 1

### aspect ratio: 170

### <black base>

A-19 molybdenum disulfide: average particle size 3 µm, water contact angle 120°, Mohs hardness 1

### aspect ratio: 20

Here are lipophilic lubricating components. It is to be noted that the previously mentioned turbidimetric titration method was applied to the method for measuring the solubility parameter (SP value).

### <oil>

B-1 plant oil: palm oil, SP value 8.5
B-2 plant oil: castor oil, SP value 9.0
B-3 plant oil: polyoxyethylene castor oil (product with 0.5 mol of ethylene oxide added), SP value 10.0
B-4 plant oil: polyoxyethylene castor oil (product with 1 mol of ethylene oxide added), SP value 11.6
B-5 mineral oil: naphthenic mineral oil, SP value 8.3
B-6 synthetic oil: trimethylolpropane trioleate, SP value 8.7

### <extreme-pressure agent>

B-7 tricresyl phosphate, SP value 8.9

### <soap>

B-8 zinc stearate, melting point 120°C, SP value 8.7

### <wax>

B-9 polyethylene wax, melting point 110°C, SP value 8.1

### <mixture of oil and extreme-pressure agent>

B-10 (B-1) : (B-7) = 1 : 0.02 (mass ratio)
B-11 (B-1) : (B-7) = 1 : 0.03 (mass ratio)
B-12 (B-1) : (B-7) = 1 : 0.1 (mass ratio)
B-13 (B-1) : (B-7) = 1 : 1 (mass ratio)
B-14 (B-1) : (B-7) = 1 : 1.1 (mass ratio)

Here are base components for lubricating coatings and binders, used for tests.

### <base component and binder>

C-1 sodium tungstate
C-2 potassium tetraborate
C-3 sodium silicate No. 3
C-4 sodium tripolyphosphate
C-5 sodium tartrate
C-6 potassium stearate
C-7 acrylic resin: copolymerization product of methylmethacrylate and n-butylacrylate, subjected to emulsion polymerization with polyoxyethylene alkyl phenyl ether (molecular weight: 150000 or more), average particle size 0.5 µm, solid content concentration 40 mass%
C-8 urethane resin (powder, molecular weight: 100000), average particle size 3 µm

Here is a surfactant used for tests.

### <surfactant>

D-1 polyoxyethylene sorbitol tetraoleate (60 mol ethylene oxide added)

### [method for inclusion of lipophilic lubricating component between particles and/or between layers of layered clay mineral]

As for the oil and extreme-pressure agent that are liquid at room temperature, the oil and the extreme-pressure agent were added to the layered clay mineral in proportions equal to or larger than an includable amount (1 : 1 in mass ratio), and mixed with the use of a mortar until being homogeneous in whole, thereby resulting in the lubricating component included between particles and/or between layers. Thereafter, the excess oil and extreme-pressure adhering to the surface of the layered clay mineral were removed by immersion in boiling water for 10 minutes, and the layered clay mineral was left to dry at room temperature for 24 hours. Alternatively, in the case of zinc stearate and wax which are poorly-soluble and solid at room temperature, the lubricating component turned into a liquid at a temperature equal to or higher than the melting points was added to the layered clay mineral (1 : 1 in mass ratio), and mixed therewith in a mortar until becoming fully homogeneous, thereby resulting in the lubricating component included between particles and/or between layers. Thereafter, the wax (or zinc stearate) adhering to particle surfaces was removed by immersion for 10 minutes in an oil bath warmed to a temperature equal to the melting point of the wax (or zinc stearate) or higher, thereafter, the oil on the particle surfaces was removed by immersion in boiling water for 10 minutes, and thereafter, the layered clay mineral was left to dry at room temperature for 24 hours.

### [method for measuring inclusion amount of lipophilic lubricating component]

The inclusion amount of the lipophilic lubricating component was measured with the use of a total organic carbon meter (TOC-5000/SSM-5000A from Shimadzu Corporation) equipped with a solid sample burning system. The measuring method will be mentioned in detail below. First, a lipophilic lubricating component alone (lipophilic lubricating component itself) to be included was used and burned completely at a furnace temperature of 700°C, thereby creating a calibration curve of carbon intensity-lubricating component amount. Next, measured is the carbon intensity in carrier particles with the lipophilic lubricating component included between particles of and/or between layers of the layered clay mineral by the previously mentioned method under the same condition, and the obtained value is converted to the lubricating component amount. $inclusion amount \left(%\right) = \left(mass of lipophilic lubricating component/total mass of carrier particle\right) \times 100$

### [method for measuring coating amount of lubricating coating]

With the use of a commercially available degreasing agent (registered trademark: FINECLEANER E6400 from Nihon Parkerizing Co., Ltd.), under the conditions of concentration 20 g/L and temperature 60°C, a test piece with a lubricating coating formed was immersed for 30 minutes, thereby removing the lubricating coating, and the coating amount was determined from the difference in mass between before and after the immersion. $coating amount \left({g/m}^{2}\right) = \left(test piece mass before removing-test piece mass after removing\right) / surface area of test piece$

### [treatment method]

### <step A (water-based lubricating coating agent)>

(1) degreasing: a test piece (metal material) was immersed for 10 minutes in a commercially available degreasing agent (registered trademark: FINECLEANER E6400 from Nihon Parkerizing Co., Ltd., concentration: 20 g/L) warmed to 60°C.
(2) water washing: the degreased test piece was immersed for 10 seconds in tap water warmed to 60°C.
(3) lubrication treatment (contact step): the test piece washed with the water was immersed for 30 seconds in the lubricating coating agent for metal materials (see Table 1), warmed to 60°C.
(4) drying: the test piece subjected to the lubrication treatment was dried for 3 minutes at 80°C.

### <step B (water-based lubricating coating agent)>

(1) shot blasting: a test piece (metal material) was subjected to a shot blasting treatment for 5 minutes with the use of shot balls of ϕ0.5 mm (from SUS).
(2) water washing: the test piece subjected to shot blasting was immersed for 90 seconds in tap water warmed to 60°C.
(3) lubrication treatment (contact step): the test piece washed with the water was immersed for 30 seconds in the lubricating coating agent for metal materials (see Table 1), warmed to 60°C.
(4) drying: the test piece subjected to the lubrication treatment was dried for 3 minutes at room temperature (blowing).

### <step C (oil-based lubricating coating agent)>

(1) degreasing: a test piece (metal material) was immersed for 10 minutes in a commercially available degreasing agent (registered trademark: FINECLEANER E6400 from Nihon Parkerizing Co., Ltd., concentration: 20 g/L) warmed to 60°C.
(2) water rinsing: the degreased test piece was immersed for 10 seconds in tap water warmed to 60°C.
(3) drying: the test piece rinsed with the water was dried for 3 minutes at 80°C.
(4) lubrication treatment (contact step): the dried test piece was immersed for 30 seconds in the lubricating coating agent for metal materials (see Table 2) at room temperature.

### <step D (powder-based lubricating coating agent)>

(1) shot blasting: a test piece (metal material) was subjected to a shot blasting treatment for 5 minutes with the use of shot balls of ϕ0.5 mm (from SUS).
(2) water rinsing: the test piece subjected to shot blasting was immersed for 90 seconds in tap water warmed to 60°C.
(3) drying: the test piece rinsed with the water was dried for 3 minutes at 80°C.
(4) lubrication treatment (contact step): to the dried test piece, the lubricating coating agent for metal materials (see Table 3) with the solid lubricant dispersed in the base component (C-8) as a binder was applied with the use of an air gun for electrostatic powder coating so as to achieve a predetermined coating amount.
(5) drying: the test piece subjected to the lubrication treatment was dried for 3 minutes at 150°C.

### <step E (phosphate + lubrication)>

(1) degreasing: a test piece (metal material) was immersed for 10 minutes in a commercially available degreasing agent (registered trademark: FINECLEANER E6400 from Nihon Parkerizing Co., Ltd., concentration: 20 g/L) warmed to 60°C.
(2) water rinsing: the degreased test piece was immersed for 30 seconds in tap water at room temperature.
(3) chemical conversion treatment (chemical conversion treatment step): the test piece rinsed with the water was immersed for 10 minutes in a commercially available phosphate treatment solution (registered trademark: PALBOND 181X from Nihon Parkerizing Co., Ltd., concentration: 90 g/L) warmed to 80°C.
(4) water rinsing: the test piece subjected to the chemical conversion treatment was immersed for 30 seconds in tap water warmed to 60°C.
(5) lubrication treatment (contact step): the test piece washed with the water was immersed for 30 seconds in the lubricating coating agent for metal materials (see Table 1), warmed to 60°C.
(6) drying: the test piece subjected to the lubrication treatment was dried for 3 minutes at 80°C.

Table 1 shows test standards for the water-based lubricating coating agents for metal materials. Example 11 using layered clay mineral A-11 is for reference and outside of the scope of the claimed invention.

### [Table 1]

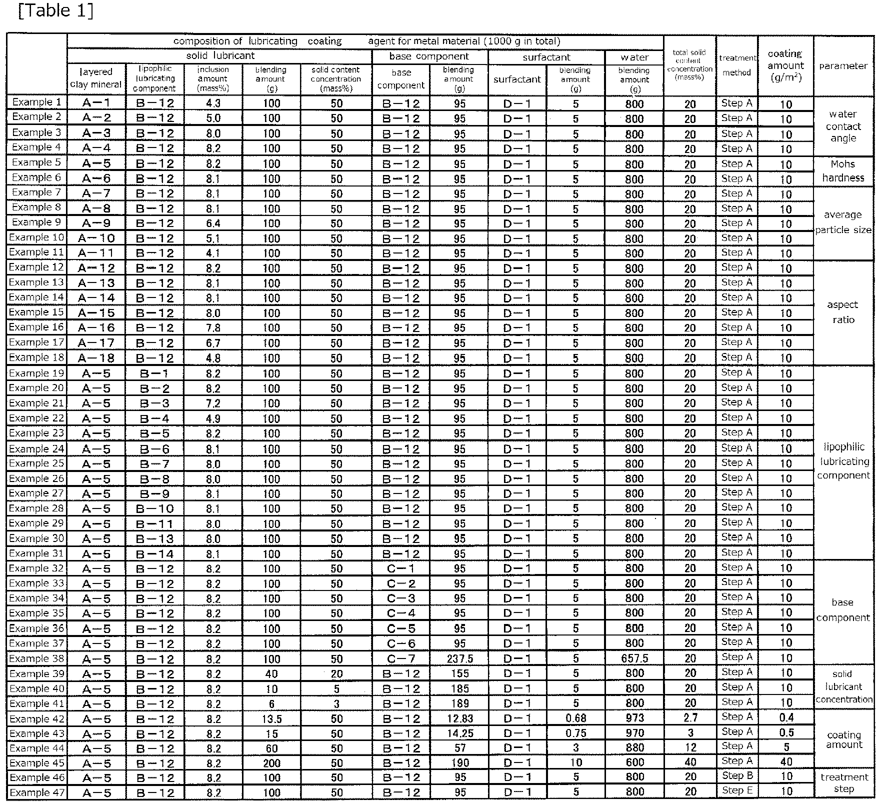

Table 2 shows test standards for the oil-based lubricating coating agents for metal materials. Example 58 using layered clay mineral A-11 is for reference and outside of the scope of the claimed invention.

### [Table 2]

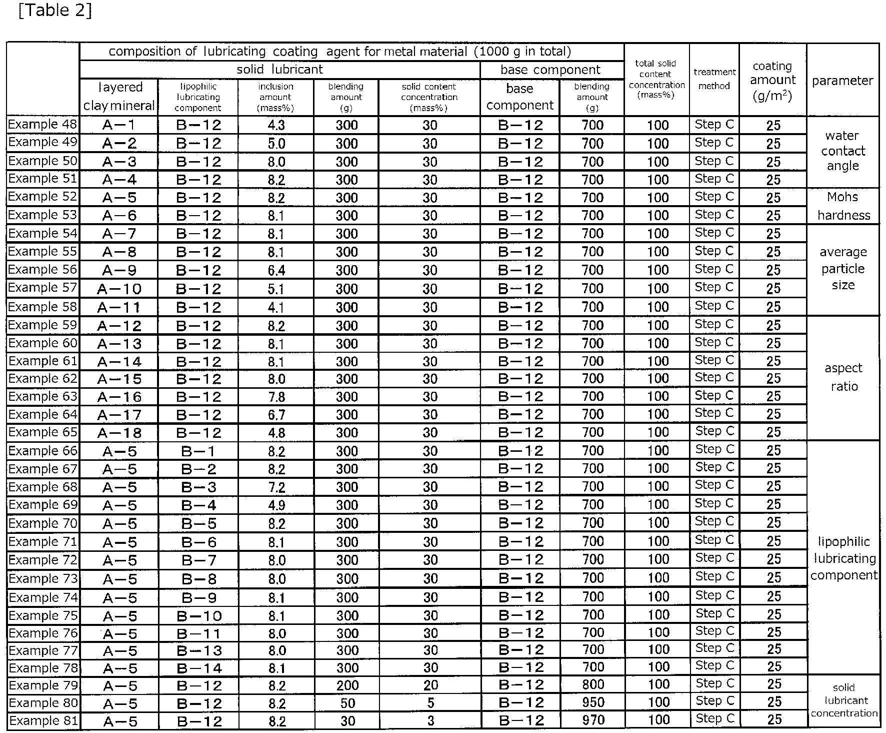

Table 3 shows test standards for the powder-based lubricating coating agents for metal materials. Example 92 using layered clay mineral A-11 is for reference and outside of the scope of the claimed invention.

### [Table 3]

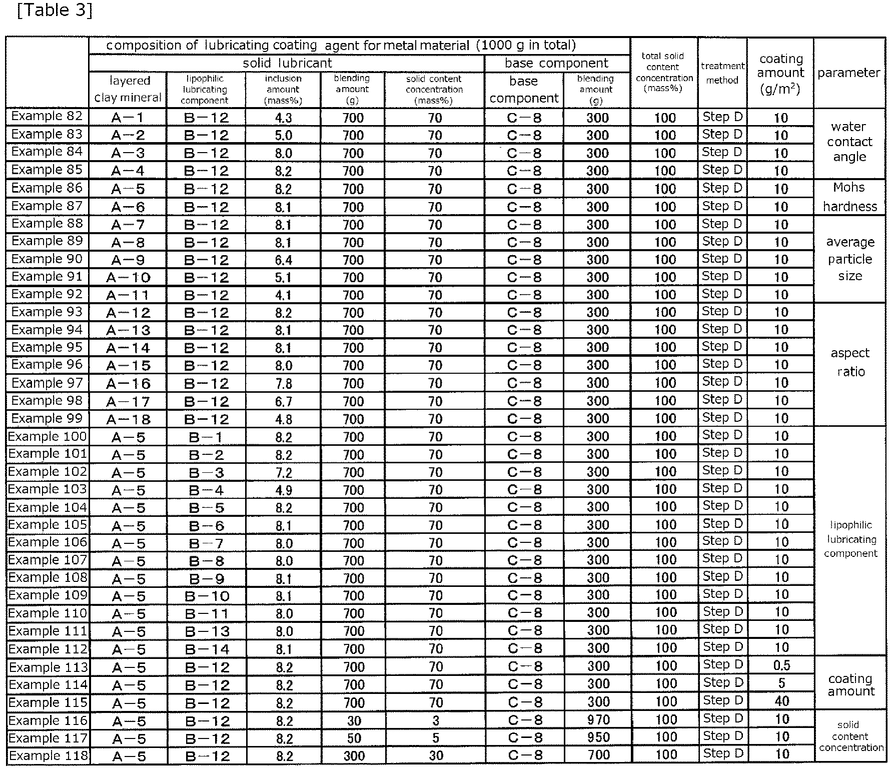

### [comparative example 1]

### <zinc phosphate treatment + reactive soap treatment>

(1) degreasing: a test piece (metal material) was immersed for 10 minutes in a commercially available degreasing agent (registered trademark: FINECLEANER E6400 from Nihon Parkerizing Co., Ltd., concentration: 20 g/L) warmed to 60°C.
(2) water rinsing: the degreased test piece was immersed for 30 seconds in tap water at room temperature.
(3) phosphate treatment: the test piece rinsed with the water was immersed for 10 minutes in a commercially available phosphate treatment solution (registered trademark: PALBOND 181X from Nihon Parkerizing Co., Ltd., concentration: 90 g/L) warmed to 80°C.
(4) water rinsing: the test piece subjected to the phosphate treatment was immersed for 30 seconds in tap water at room temperature.
(5) reactive soap treatment: the test piece rinsed with the water was immersed for 5 minutes in a commercially available reactive soap treatment solution (registered trademark: PALUBE 235 from Nihon Parkerizing Co., Ltd., concentration: 70 g/L) warmed to 80°C.
(6) drying: the test piece subjected to the reactive soap treatment was dried for 3 minutes at 80°C.

### [comparative example 2]

The water-based lubricant (Patent Literature 1: JP 3517522 B2) listed below was prepared, and applied to a test piece by the method in accordance with the step A such that the dried coating amount was 10 g/m².

### <water-based lubricant>

sodium tetraborate: 10.0 weight%
calcium stearate: 5.0 weight%
palm oil: 5.0 weight%
polyoxyethylene alkyl ether: 1.0 weight%
balance: water

### [comparative example 3]

The following water-based lubricating coating agent was prepared with the use of the talc (A-5) including no lipophilic lubricating component. The agent was applied to a test piece by the method in accordance with the step A such that the dried coating amount was 10 g/m².

### <water-based lubricant>

solid lubricant: A-5 100 g
base component: C-1 95 g
surfactant: D-1 5 g
water: 800 g

### [comparative example 4]

The following oil-based lubricant including no solid lubricant was used and applied to a test piece in accordance with the step C such that the coating amount was 25 g/m².

### <oil-based lubricant>

base component: B-10 1000 g

### [comparative example 5]

The following powder-based lubricating coating agent was prepared with the use of the talc (A-5) including no lipophilic lubricating component. The agent was applied to a test piece by the method in accordance with the step D such that the dried coating amount was 10 g/m².

### <powder-based lubricant>

solid lubricant: A-5 700 g
base component: C-8 300 g

### [comparative example 6]

The following water-based lubricating coating agent was prepared with the use of molybdenum disulfide. The agent was applied to a test piece by the method in accordance with the step A such that the dried coating amount was 10 g/m².

### <water-based lubricant>

solid lubricant: A-19 (molybdenum disulfide) 100 g
base component: B-10 95 g
surfactant: D-1 5 g
water: 800 g

### [evaluation method]

Effects of the lubricating coating agent for metal materials according to the present invention were verified by the following evaluations. It is to be noted that among the examples and the comparative examples, at the standard of using the oil or the extreme-pressure agent as a base component for a lubricating coating and a binder component, no slidability test (Bowden test) was carried out, because the standard is not suitable for the intended use as sliding coatings.
(1) lubricity (forgeability, wire drawability, tube drawability, slidability)
(2) corrosion resistance
(3) operability
(4) appearance

### [forgeability test]

### <spike test>

test material: S45C material (25 mmϕ × 30 mm) subjected to spheroidizing annealing
test method: Test was carried out in accordance with the invention in JP 3227721 B2 for the evaluation. The lubricating coatings following protrusions of the test pieces were evaluated visually. In this test, in order to confirm whether the lubricity was decreased or not due to re-absorption of moisture by the lubricating coating, the lubricity was compared between a case of completely drying the lubricating coating under the condition of 80°C for 3 minutes and a case of moisture absorption by the lubricating coating under the condition of 30°C and relative humidity 80% for 5 hours after the complete drying. Here are evaluation criteria. It is to be noted that the level B or higher corresponds to a practical level.
evaluation criteria:
   S: the coating which followed fully to the protrusion tip (almost no metallic luster)
   A: the coating which followed to the protrusion tip
   B: the coating which followed to the protrusion top
   C: the coating which followed to the protrusion center
   D: the coating which followed to the protrusion bottom

### [wire drawability test]

test material: S45C, cp3.0 mm, 50000 mm in length
test method: wire drawing was made under the condition of a reduction of area from 5 to 20% with the use of an R die The limited reduction of area capable of stable wire drawing without any scratch or chatter was evaluated in accordance with the following evaluation criteria. It is to be noted that the level B or higher corresponds to a practical level.
evaluation criteria:
   S: limited reduction of area of 23% or more
   A: limited reduction of area of 20% or more and less than 23%
   B: limited reduction of area of 15% or more and less than 20%
   C: limited reduction of area of 10% or more and less than 15%
   D: limited reduction of area of less than 10%

### [tube drawability test]

test material: STKM17A, cp25.4 mm × 2.5 mmt, 2000 mm in length
test method: Test was carried out under the condition of tube drawing speed 20 m/min with the use of an R die and a cylindrical plug in a draw bench The limited reduction of area capable of stable tube drawing without any scratch or chatter was evaluated in accordance with the following evaluation criteria. It is to be noted that the level B or higher corresponds to a practical level.
evaluation criteria:
   S: limited reduction of area of 53% or more
   A: limited reduction of area of 50% or more and less than 53%
   B: limited reduction of area of 45% or more and less than 50%
   C: limited reduction of area of 40% or more and less than 45%
   D: limited reduction of area of less than 40%

### [slidability test]

### <Bowden test>

test material: SPCC-SD, 70 mm × 150 mm × 0.8 mmt
test method: a Bowden test was carried out mainly as performance evaluation of sliding coatings (in the case of a water-soluble inorganic salt, a water-soluble organic salt, or a water-based resin for the base component of the lubricating coating). This test is carried out by sliding a plate test piece with the lubricating coating formed, with the test piece in contact with a steel ball under constant load, and measuring the friction coefficient and the sliding frequency. When the coating was fractured, and then seizured, the friction coefficient reached 0.25, and thus, the slidability was evaluated with the sliding frequency achieved until the friction coefficient reached 0.25. It is to be noted that the level B or higher corresponds to a practical level in the following evaluation criteria.
test conditions:
   load: 50 N
   indenter: 10 mmϕ SUJ2 steel ball
   sliding speed: 10 mm/s
   test temperature: 60°C
evaluation criteria:
   S: 250 times or more
   A: 200 times or more, and less than 250 times
   B: 150 times or more, and less than 200 times
   C: 100 times or more, and less than 150 times
   D: less than 100 times

### [comprehensive evaluation of lubricity]

The respective evaluation results for forgeability, wire drawability, tube drawability, and slidability were scored as follows, and the average value was regarded as a comprehensive evaluation result for lubricity. It is to be noted that whether the lubricity was practical or not was determined by the performance of B or higher (score of 3 or higher) in each lubricity evaluation and the average value of 3.0 or higher for the scores.
S = 5, A=4, B = 3, C = 2, D = 1

### [corrosion resistance test]

test material: SPCC-SD, 70 mm × 150 mm × 0.8 mmt
test method: for the corrosion resistance test, the plate test piece with the lubricating coating formed was left for 1 month in the plant in the Hiratsuka district, and evaluated with the rust area ratio. In the plant, the average temperature was 27.6°C, and the average humidity was 75%. It is to be noted that the level B or higher corresponds to a practical level in the following evaluation criteria.
evaluation criteria:
   A: rust area ratio of less than 1%
   B: rust area ratio of 1% or more and less than 10%
   C: rust area ratio of 10% or more and less than 30%
   D: rust area ratio of 30% or more and less than 80%

### [operability evaluation]

The performance of line operation was evaluated by a treatment load test (sludge generation test). In this test, with respect to 1 L of the lubricating coating agent, a test plate (SPCC-SD: 70 mm × 150 mm × 0.8 mmt) was continuously treated until reaching a treatment load of 0.3 m², and evaluated with the presence or absence of sludge generated. It is to be noted that the level B or higher corresponds to a practical level in the following evaluation criteria.
evaluation criteria:
A: no sludge generated
B: sludge slightly generated (generation amount: less than 3 g/L)
C: sludge generated (generation amount: 3 g/L or more)

### [appearance evaluation]

The L value was measured as appearance evaluation after the formation of the lubricating coating.
test material: SPCC-SD, 70 mm × 150 mm × 0.8 mmt
measuring instrument: color computer SM-3 from Suga Test Instruments Co., Ltd.
evaluation criteria: here are evaluation criteria. The degree of blackness is higher as the L value is lower, which is determined to mean a worse working environment. The level B or higher corresponds to a practical level.
   A: 70 or more
   B: 50 or more, and less than 70
   C: less than 50

Table 4 shows the evaluation results for the water-based lubricating coating agents for metal materials. Example 11 is for reference and outside of the scope of the claimed invention.

### [Table 4]

**[Table 4]**

| | lubricity test | | | | | | corrosion resistance | operability | appearance | parameter |
|---|---|---|---|---|---|---|---|---|---|---|
| | forgeability | (spike test) | wire drawability | tube drawability | comprehensive slidability evaluation of lubricity | | | | | |
| | drying | moisture absorption | | | | | | | | |
| Example 1 | B | B | B | B | | 3.0 | B | A | A | water contact angle |
| Example 2 | A | B | A | A | | 3.8 | A | A | A | |
| Example 3 | S | A | A | A | | 4.3 | A | A | A | |
| Example 4 | S | A | S | A | | 4.5 | A | A | A | |
| Example 5 | S | A | S | S | | 4.8 | A | A | A | Mohs hardness |
| Example 6 | A | B | B | A | | 3.5 | A | A | A | |
| Example 7 | S | A | S | S | | 4.8 | A | A | A | average particle size |
| Example 8 | S | A | S | S | | 4.8 | A | A | A | |
| Example 9 | S | A | S | A | | 4.5 | A | A | A | |
| Example 10 | A | B | A | A | | 3.8 | A | A | A | |
| Example 11 | B | B | B | B | | 3.0 | B | A | A | |
| Example 12 | A | B | B | B | | 3.3 | A | A | A | aspect ratio |
| Example 13 | A | B | A | A | | 3.8 | A | A | A | |
| Example 14 | S | A | S | S | | 4.8 | A | A | A | |
| Example 15 | S | A | S | S | | 4.8 | A | A | A | |
| Example 16 | A | B | A | A | | 3.8 | A | A | A | |
| Example 17 | A | B | B | A | | 3.5 | A | A | A | |
| Example 18 | B | B | B | B | | 3.0 | B | A | A | |
| Example 19 | S | A | A | A | | 4.3 | A | A | A | lipophilic lubricating component |
| Example 20 | S | A | A | A | | 4.3 | A | A | A | |
| Example 21 | A | A | A | A | | 4.0 | A | A | A | |
| Example 22 | B | B | B | B | | 3.0 | B | A | A | |
| Example 23 | S | A | A | A | | 4.3 | A | A | A | |
| Example 24 | S | A | A | A | | 4.3 | A | A | A | |
| Example 25 | S | A | A | A | | 4.3 | A | A | A | |
| Example 26 | S | A | A | A | | 4.3 | A | A | A | |
| Example 27 | S | A | A | A | | 4.3 | A | A | A | |
| Example 28 | S | A | A | A | | 4.3 | A | A | A | |
| Example 29 | S | A | S | S | | 4.8 | A | A | A | |
| Example 30 | S | A | S | S | | 4.8 | A | A | A | |
| Example 31 | S | A | S | S | | 4.8 | A | A | A | |
| Example 32 | S | A | A | A | A | 4.2 | A | A | A | base component |
| Example 33 | S | B | S | A | A | 4.2 | A | A | A | |
| Example 34 | B | A | B | B | B | 3.2 | A | A | A | |
| Example 35 | S | A | S | A | A | 4.4 | A | A | A | |
| Example 36 | B | B | B | A | B | 3.2 | A | A | A | |
| Example 37 | A | B | A | A | B | 3.6 | A | A | A | |
| Example 38 | A | B | A | A | A | 3.8 | A | A | A | |
| Example 39 | S | A | S | S | | 4.8 | A | A | A | solid lubricant concentration |
| Example 40 | A | B | A | A | | 3.8 | A | A | A | |
| Example 41 | B | B | B | B | | 3.0 | A | A | A | |
| Example 42 | B | B | B | B | | 3.0 | B | A | A | coating amount |
| Example 43 | A | B | A | B | | 3.5 | A | A | A | |
| Example 44 | S | A | A | A | | 4.3 | A | A | A | |
| Example 45 | S | A | S | S | | 4.8 | A | A | A | |
| Example 46 | S | A | S | S | | 4.8 | A | A | A | treatment step |
| Example 47 | S | S | S | S | | 5.0 | A | A | A | |

Table 5 shows the evaluation results for the oil-based lubricating coating agents for metal materials. Example 58 is for reference and outside of the scope of the claimed invention.

### [Table 5]

**[Table 5]**

| | lubricity test | | | | | corrosion resistance | operability | appearance | parameter |
|---|---|---|---|---|---|---|---|---|---|
| | forgeability (spike test) | | wire drawability | tube drawability | comprehensive evaluation of lubricity | | | | |
| | drying | moisture absorption | | | | | | | |
| Example 48 | B | B | B | B | 3.0 | B | A | A | water contact angle |
| Example 49 | A | B | B | A | 3.5 | A | A | A | |
| Example 50 | S | A | A | A | 4.3 | A | A | A | |
| Example 51 | S | A | S | A | 4.5 | A | A | A | |
| Example 52 | S | S | S | A | 4.8 | A | A | A | Mohs hardness |
| Example 53 | A | B | A | A | 3.8 | A | A | A | |
| Example 54 | S | S | S | A | 4.8 | A | A | A | average particle size |
| Example 55 | S | S | S | A | 4.8 | A | A | A | |
| Example 56 | A | B | A | A | 3.8 | A | A | A | |
| Example 57 | A | B | A | B | 3.5 | A | A | A | |
| Example 58 | B | B | B | B | 3.0 | B | A | A | |
| Example 59 | B | B | B | B | 3.0 | A | A | A | aspect ratio |
| Example 60 | A | B | B | A | 3.5 | A | A | A | |
| Example 61 | S | S | S | A | 4.8 | A | A | A | |
| Example 62 | S | S | S | A | 4.8 | A | A | A | |
| Example 63 | A | B | A | A | 3.8 | A | A | A | |
| Eaxmple 64 | A | B | A | B | 3.5 | A | A | A | |
| Example 65 | B | B | B | B | 3.0 | B | A | A | |
| Example 66 | S | B | A | A | 4.0 | A | A | A | lipophilic lubricating component |
| Example 67 | S | B | A | A | 4.0 | A | A | A | |
| Example 68 | A | B | B | A | 3.5 | A | A | A | |
| Example 69 | B | B | B | B | 3.0 | B | A | A | |
| Example 70 | S | B | A | A | 4.0 | A | A | A | |
| Example 71 | S | B | A | A | 4.0 | A | A | A | |
| Example 72 | S | B | A | A | 4.0 | A | A | A | |
| Example 73 | S | B | A | A | 4.0 | A | A | A | |
| Example 74 | S | B | A | A | 4.0 | A | A | A | |
| Example 75 | S | B | A | A | 4.0 | A | A | A | |
| Example 76 | S | S | S | A | 4.8 | A | A | A | |
| Example 77 | S | S | S | A | 4.8 | A | A | A | |
| Example 78 | S | S | S | A | 4.8 | A | A | A | |
| Example 79 | S | A | S | A | 4.5 | A | A | A | solid lubricant concentration |
| Example 80 | A | B | B | B | 3.3 | A | A | A | |
| Example 81 | B | B | B | B | 3.0 | A | A | A | |

Table 6 shows the evaluation results for the powder-based lubricating coating agents for metal materials. Example 92 is for reference and outside of the scope of the claimed invention.

### [Table 6]

**[Table 6]**

| | lubricity test | | | | | | corrosion resistance | operability | appearance | parameter |
|---|---|---|---|---|---|---|---|---|---|---|
| | forgeability (spike test) | | wire drawability | tube drawability | slidability | comprehensive evaluation of lubricity | | | | |
| | drying | moisture absorption | | | | | | | | |
| Example 82 | B | B | B | B | A | 3.2 | B | A | A | water contact angle |
| Example 83 | A | B | A | A | A | 3.8 | A | A | A | |
| Example 84 | S | A | A | A | A | 4.2 | A | A | A | |
| Example 85 | S | A | S | A | A | 4.4 | A | A | A | |
| Example 86 | S | A | S | S | S | 4.8 | A | A | A | Mohs hardness |
| Example 87 | A | A | A | A | A | 4.0 | A | A | A | |
| Example 88 | S | A | S | S | S | 4.8 | A | A | A | average particle size |
| Example 89 | S | A | S | S | S | 4.8 | A | A | A | |
| Example 90 | S | A | A | A | A | 4.2 | A | A | A | |
| Example 91 | A | B | A | A | A | 3.8 | A | A | A | |
| Example 92 | B | B | B | B | A | 3.2 | B | A | A | |
| Example 93 | A | B | B | B | B | 3.2 | A | A | A | aspect ratio |
| Example 94 | A | B | A | A | A | 3.8 | A | A | A | |
| Example 95 | S | A | S | S | S | 4.8 | A | A | A | |
| Example 96 | S | A | S | S | S | 4.8 | A | A | A | |
| Example 97 | S | A | S | A | A | 4.4 | A | A | A | |
| Example 98 | A | A | A | A | A | 4.0 | A | A | A | |
| Example 99 | A | B | A | B | A | 3.6 | B | A | A | |
| Example 100 | A | A | A | A | A | 4.0 | A | A | A | lipophilic lubricating component |
| Example 101 | A | A | A | A | A | 4.0 | A | A | A | |
| example 102 | A | B | B | B | A | 3.4 | A | A | A | |
| Example 103 | B | B | B | B | B | 3.0 | B | A | A | |
| Example 104 | A | A | A | A | A | 4.0 | A | A | A | |
| Example 105 | A | A | A | A | A | 4.0 | A | A | A | |
| Example 106 | A | B | A | A | A | 3.8 | A | A | A | |
| Example 107 | A | B | A | B | A | 3.6 | A | A | A | |
| Example 108 | A | B | A | B | A | 3.6 | A | A | A | |
| Example 109 | A | A | A | A | A | 4.0 | A | A | A | |
| Example 110 | S | A | S | S | S | 4.8 | A | A | A | |
| Example 111 | S | A | S | S | S | 4.8 | A | A | A | |
| Example 112 | S | A | S | S | S | 4.8 | A | A | A | |
| Example 113 | B | B | B | B | B | 3.0 | A | A | A | coating amount |
| Example 114 | A | A | A | A | A | 4.0 | A | A | A | |
| Example 115 | S | A | S | S | S | 4.8 | A | A | A | |
| Example 116 | B | B | B | B | B | 3.0 | A | A | A | solid lubricant concentration |
| Example 117 | A | B | A | A | A | 3.8 | A | A | A | |
| Example 118 | S | A | S | S | S | 4.8 | A | A | A | |

Table 7 shows the evaluation results for comparative examples.

### [Table 7]

**[Table 7]**

| | lubricity test | | | | | | corrosion resistance | operability | appearance |
|---|---|---|---|---|---|---|---|---|---|
| | forgeability (spike test) | | wire drawability | tube drawability | slidability | comprehensive evaluation of lubricity | | | |
| | drying | moisture absorption | | | | | | | |
| Comparative Example 1 | S | S | S | S | S | 5.0 | A | C | B |
| Comparative Example 2 | A | C | A | A | A | 3.8 | A | A | A |
| Comparative Example 3 | C | C | D | D | C | 1.6 | C | A | A |
| comparative Example 4 | D | D | D | D | | 1.0 | C | A | A |
| Comparative Example 5 | C | C | C | C | C | 2.0 | C | A | A |
| Comparative Example 6 | S | B | A | A | | 4.0 | A | A | C |

As is clear from the evaluation results shown in Tables 4 to 6, the lubricating coating agents for metal materials according to the examples of the present invention have achieved performance equal to or higher than the practical level (rated as B or higher) in all of the evaluation tests. In contrast, as for the comparative examples in Table 7, comparative example 1 subjected to the phosphate + reactive soap treatment has achieved lubricity at the practical level, but operability rated as C. In addition, comparative example 2 has achieved corrosion resistance, operability, and an appearance at the practical levels, but lubricity rated as C in the condition of moisture absorption. comparative examples 3 to 5, the lubricants including no solid lubricant according to the present invention, have failed to reach the practical levels, with all of the lubricity tests and the corrosion resistance rated as C or lower. comparative example 6 has achieved excellent lubricity, corrosion resistance, and operability, but the black appearance of the coating was rated as C. From the foregoing results, the present invention can be considered to have a greater deal of potential in industry, as compared with the prior art.

## Claims

1. A solid lubricant comprising carrier particles, in which a lipophilic lubricating component that is at least one of an oil, an extreme-pressure agent, a soap, and a wax is trapped between particles of and/or layers of at least one layered clay mineral selected from the group consisting of natural products and synthetic products of a smectite group, a vermiculite group, a mica group, a brittle mica group, a pyrophyllite group, and a kaolinite group, and
wherein the layered clay mineral is 30 µm or less in average particle size, wherein
the average particle size is measured by a laser diffraction method on a volumetric basis.

2. The solid lubricant according to claim 1, wherein an aspect ratio is 3 to 150 in a cross section of the layered clay mineral, wherein the aspect ratio is a proportion of the length of a planar part to a thickness of a particle of the layered clay mineral.

3. The solid lubricant according to claim 1 or 2, wherein the lipophilic lubricating component has a solubility parameter (SP value) of 10 or less.

4. The solid lubricant according to any one of claims 1 to 3, wherein the layered clay mineral is 40° or more in water contact angle.

5. The solid lubricant according to any one of claims 1 to 4, wherein an inclusion amount of the lipophilic lubricating component is 5 mass% or more in mass ratio to a total mass of the carrier particles, wherein
the inclusion amount of the lipophilic lubricating component is measured with the use of a total organic carbon meter equipped with a solid sample burning system.

6. A use of the solid lubricant according to any one of claims 1 to 5in a lubricating coating agent for plastic working of a metal material.

7. A water-based lubricating coating agent for a metal material, wherein a component comprising at least the solid lubricant according to any one of claims 1 to 6 is dispersed in water, and wherein a concentration of the solid lubricant is 5 mass% or higher in mass ratio to a mass of a total solid content in the lubricating coating agent.

8. An oil-based lubricating coating agent for a metal material, wherein a component comprising at least the solid lubricant according to any one of claims 1 to 6 is dispersed in an oil, and wherein a concentration of the solid lubricant is 5 mass% or higher in mass ratio to a mass of a total solid content in the lubricating coating agent.

9. A powder-based lubricating coating agent for a metal material, which contains a component comprising at least the solid lubricant according to any one of claims 1 to 6, wherein a concentration of the solid lubricant is 5 mass% or higher in mass ratio to a mass of a total solid content in the lubricating coating agent.

10. A surface-treated metal material, wherein the lubricating coating agent for a metal material according to any one of claims 7 to 9 is provided on/over a metal material surface to form a coating having a coating amount of 0.5 g/m² or more as a dried coating amount.

11. A method for forming a lubricating coating for a metal material, the method comprising a contact step of bringing a metal material into contact with the lubricating coating agent for a metal material according to any one of claims 7 to 9.

12. The method for forming a lubricating coating for a metal material according to claim 11, the method further comprising a chemical conversion treatment step of coating a surface of the metal material with a chemical conversion coating before the contact step.

## Patentansprüche

1. Festes Schmiermittel, das Trägerpartikel umfasst, in denen eine lipophile Schmierkomponente, die mindestens eine von einem Öl, einem Extremdruck-Mittel, einer Seife und einem Wachs ist, zwischen Partikel und/oder Schichten aus mindestens einem Tonschichtmineral, ausgewählt aus der Gruppe, bestehend aus natürlichen Produkten und synthetischen Produkten aus einer Smektitgruppe, einer Vermikulitgruppe, einer Glimmergruppe, einer Sprödglimmergruppe, einer Pyrophyllitgruppe und einer Kaolitgruppe, eingeschlossen ist und
in dem das Tonschichtmineral eine mittlere Partikelgröße von 30 µm oder weniger aufweist,
wobei die mittlere Partikelgröße mit einem Laserbeugungsverfahren auf Volumenbasis gemessen wird.

2. Festes Schmiermittel gemäß Anspruch 1, in dem ein Aspektverhältnis 3 bis 150 in einem Querschnitt des Tonschichtminerals ist, wobei das Aspektverhältnis das Verhältnis der Länge eines ebenen Teils zu einer Dicke eines Partikels des Tonschichtminerals ist.

3. Festes Schmiermittel gemäß Anspruch 1 oder 2, in dem die lipophile Schmierkomponente einen Löslichkeitsparameter (SP-Wert) von 10 oder weniger hat.

4. Festes Schmiermittel gemäß mindestens einem der Ansprüche 1 bis 3, in dem das Tonschichtmineral einen Wasserkontaktwinkel von 40° oder mehr hat.

5. Festes Schmiermittel gemäß mindestens einem der Ansprüche 1 bis 4, in dem die eingeschlossene Menge der lipophilen Schmierkomponente 5 Masse-% oder mehr als Massenverhältnis zu einer Gesamtmasse der Trägerpartikel ist, wobei die eingeschlossene Menge der lipophilen Schmierkomponente gemessen wird unter Verwendung eines Geräts zur Messung des gesamten organischen Kohlenstoffs, das mit einem Verbrennungssystem für Festkörperproben ausgestattet ist.

6. Verwendung des festen Schmiermittels gemäß mindestens einem der Ansprüche 1 bis 5 in einem Schmierbeschichtungsmittel für die plastische Bearbeitung eines Metallmaterials.

7. Schmierbeschichtungsmittel auf Wasserbasis für ein Metallmaterial, in dem eine Komponente, die mindestens das feste Schmiermittel gemäß mindestens einem der Ansprüche 1 bis 6 umfasst, in Wasser dispergiert ist und wobei eine Konzentration des festen Schmiermittels 5 Masse-% oder höher als Massenverhältnis zu einer Masse des Gesamtfeststoffgehalts in dem Schmierbeschichtungsmittel ist.

8. Schmierbeschichtungsmittel auf Ölbasis für ein Metallmaterial, in dem eine Komponente, die mindestens das feste Schmiermittel gemäß mindestens einem der Ansprüche 1 bis 6 umfasst, in einem Öl dispergiert ist und wobei eine Konzentration des festen Schmiermittels 5 Masse-% oder höher als Massenverhältnis zu einer Masse des Gesamtfeststoffgehalts in dem Schmierbeschichtungsmittel ist.

9. Schmierbeschichtungsmittel auf Pulverbasis für ein Metallmaterial, das eine Komponente, die mindestens das feste Schmiermittel gemäß mindestens einem der Ansprüche 1 bis 6 umfasst, enthält, wobei eine Konzentration des festen Schmiermittels 5 Masse-% oder höher als Massenverhältnis zu einer Masse des Gesamtfeststoffgehalts in dem Schmierbeschichtungsmittel ist.

10. Oberflächenbehandeltes Metallmaterial, in dem das Schmierbeschichtungsmittel für ein Metallmaterial gemäß mindestens einem der Ansprüche 7 bis 9 auf/über einer Metallmaterialoberfläche so aufgebracht ist, dass eine Beschichtung mit einer Beschichtungsmenge von 0,5 g/m² oder mehr als getrocknete Beschichtungsmenge gebildet wird.

11. Verfahren zur Bildung einer Schmierbeschichtung für ein Metallmaterial, wobei das Verfahren einen Kontaktschritt umfasst, in dem ein Metallmaterial in Kontakt mit dem Schmierbeschichtungsmittel für ein Metallmaterial gemäß mindestens einem der Ansprüche 7 bis 9 gebracht wird.

12. Verfahren zur Bildung einer Schmierbeschichtung für ein Metallmaterial gemäß Anspruch 11, wobei das Verfahren ferner einen Schritt der chemischen Umwandlungsbehandlung umfasst, in dem eine Oberfläche des Metallmaterials vor dem Kontaktschritt mit einer chemischen Umwandlungsbeschichtung beschichtet wird.

## Revendications

1. Lubrifiant solide comprenant des particules porteuses, dans lequel un composant lubrifiant lipophile, qui est au moins l'un d'une huile, un agent pour pression extrême, un savon et une cire, est piégé entre des particules de et/ou des couches d'au moins un minéral argileux lamellaire choisi dans le groupe constitué par des produits naturels et des produits synthétiques d'un groupe de smectites, d'un groupe de vermiculites, d'un groupe de micas, d'un groupe de micas cassants, d'un groupe de pyrophyllites et d'un groupe de kaolinites, et
dans lequel le minéral argileux lamellaire a une taille moyenne de particules de 30 µm ou moins, dans lequel
la taille moyenne des particules est mesurée par un procédé de diffraction laser sur une base volumétrique.

2. Lubrifiant solide selon la revendication 1, dans lequel un rapport d'aspect est de 3 pour 150 dans une section transversale du minéral argileux lamellaire, dans lequel le rapport d'aspect est une proportion de la longueur d'une partie plane à une épaisseur d'une particule du minéral argileux lamellaire.

3. Lubrifiant solide selon la revendication 1 ou 2, dans lequel le composant lubrifiant lipophile présente un paramètre de solubilité (valeur SP) de 10 ou moins.

4. Lubrifiant solide selon l'une quelconque des revendications 1 à 3, dans lequel le minéral argileux lamellaire présente un angle de contact avec l'eau de 40° ou plus.

5. Lubrifiant solide selon l'une quelconque des revendications 1 à 4, dans lequel une quantité d'inclusion du composant lubrifiant lipophile est de 5% en masse ou plus en rapport massique pour une masse totale des particules porteuses, dans lequel
la quantité d'inclusion du composant lubrifiant lipophile est mesurée à l'aide d'un analyseur de carbone organique total équipé d'un système de combustion d'échantillons solides.

6. Utilisation du lubrifiant solide selon l'une quelconque des revendications 1 à 5 dans un agent de revêtement lubrifiant pour le travail plastique d'un matériau métallique.

7. Agent de revêtement lubrifiant à base aqueuse pour un matériau métallique, dans lequel un composant comprenant au moins le lubrifiant solide selon l'une quelconque des revendications 1 à 6 est dispersé dans l'eau, et dans lequel une concentration du lubrifiant solide est de 5% en masse ou plus en rapport massique pour une masse d'une teneur totale en solides dans l'agent de revêtement lubrifiant.

8. Agent de revêtement lubrifiant à base huileuse pour un matériau métallique, dans lequel un composant comprenant au moins le lubrifiant solide selon l'une quelconque des revendications 1 à 6 est dispersé dans une huile, et dans lequel une concentration du lubrifiant solide est de 5% en masse ou plus en rapport massique pour une masse d'une teneur totale en solides dans l'agent de revêtement lubrifiant.

9. Agent de revêtement lubrifiant à base poudreuse pour un matériau métallique, qui contient un composant comprenant au moins le lubrifiant solide selon l'une quelconque des revendications 1 à 6, dans lequel une concentration du lubrifiant solide est de 5% en masse ou plus en rapport massique pour une masse d'une teneur totale en solides dans l'agent de revêtement lubrifiant.

10. Matériau métallique traité en surface, dans lequel l'agent de revêtement lubrifiant pour un matériau métallique selon l'une quelconque des revendications 7 à 9 est fourni sur/au-dessus d'une surface du matériau métallique pour former un revêtement ayant une quantité de revêtement de 0,5 g/m² ou plus à titre de quantité de revêtement sec.

11. Procédé de formation d'un revêtement lubrifiant pour un matériau métallique, le procédé comprenant une étape de contact consistant à mettre un matériau métallique en contact avec l'agent de revêtement lubrifiant pour un matériau métallique selon l'une quelconque des revendications 7 à 9.

12. Procédé de formation d'un revêtement lubrifiant pour un matériau métallique selon la revendication 11, le procédé comprenant en outre une étape de traitement de conversion chimique consistant à revêtir une surface du matériau métallique avec un revêtement de conversion chimique avant l'étape de contact.
